# EUROPEAN PATENT APPLICATION

(11) **EP 2 752 588 A1**
(43) Date of publication of application: **09.07.2014**
(21) Application number: 13250001.8
(22) Date of filing: 02.01.2013
(51) Int. Cl.: F16B 25/00, F16B 25/10

(54) **Flat drill end of a screw**

(71) Applicant: Huang, Shu-Chin, Kaohsiung City (TW)
(72) Inventor: Huang, Shu-Chin, Kaohsiung City (TW)
(74) Representative: Treeby, Philip David William

(57) **Abstract**

A flat drill end of a screw mainly includes a cylinder with a drill end having a thread wrapped around the cylinder, and a flat drill portion formed to the cylinder along to the drill end of the cylinder with a predetermined length. The thickness of the flat drill portion is less than a half of the width of the flat drill portion for receiving more debris and ejecting the debris during the drilling so as to form a drill screw capable of drilling fast and preventing split on to the working piece.

## Description

### FIELD OF THE INVENTION

The present invention relates to screws, and in particular to a flat drill and of a screw

### DESCRIPTION OF THE PRIOR ART

Screws used to drill and fasten an object have various designs to achieve fast drill, debris ejection, and secure fastening without split such as single thread, double thread, or variation of thread angle. There are also different screw types for different purposes such as screw for metal, wood, or plastic. For the screws used against hard wood, a feature of split prevention has to be considered.

Most of conventional screw designs are emphasized on drilling speed or debris ejection through the screw end. However, the causes of crash to a working piece or threaded hole are usually the extruding of debris during the drilling. For there is not enough space for receiving and ejecting the debris, a split to the working piece or crash to the inner thread of a hole can be easily happened by the compression.

Therefore, to create a screw having a better split prevention is an urgent objective to be accomplished.

### SUMMARY OF THE PRESENT INVENTION

Accordingly, the primary object of the present invention is to provide a flat drill end of a screw for easily receiving and ejecting debris during the drilling with power-saving and split prevention.

To achieve above object, the flat drill end of a screw includes a cylinder having a thread wrapped around the cylinder and a drill end, and a flat drill portion formed to the cylinder along to the drill end of the cylinder with a predetermined length. The thickness of the flat drill portion is less than a half of the width of the flat drill portion for receiving more debris and ejecting the debris during the drilling so as to form a drill screw capable of drilling fast and preventing split to the working piece.

### BRIEF DESCRIPTION OF THE DRAWINGS

Fig. 1 is a schematic view showing an embodiment 1 of the present invention.
Fig. 1A is a cross-section view through a line 1A-1A in Fig. 1.
Fig. 1B is a left side view of the embodiment 1 shown in Fig. 1.
Fig. 2 is a schematic view showing an embodiment 2 of the present invention.
Fig. 2A is a cross-section view through a line 2A-2A in Fig. 2.
Fig. 2B is a left side view of the embodiment 2 shown in Fig. 2.
Fig. 3 is a schematic view showing an embodiment 3 of the present invention.
Fig. 3A is a cross-section view through a line 3A-3A in Fig. 3.
Fig. 3B is a left side view of the embodiment 3 shown in Fig. 3.
Fig. 4 is a schematic view showing an embodiment 4 of the present invention.
Fig. 4A is a cross-section view through a line 4A-4A in Fig. 4.
Fig. 4B is a left side view of the embodiment 4 shown in Fig. 4.
Fig. 5 is a schematic view showing an embodiment 5 of the present invention.
Fig. 5A is a cross-section view through a line 5A-5A in Fig. 5.
Fig. 5B is a left side view of the embodiment 5 shown in Fig. 5.
Fig. 6 is a schematic view showing an embodiment 6 of the present invention.
Fig. 6A is a cross-section view through a line 6A-6A in Fig. 6.
Fig. 6B is a left side view of the embodiment 6 shown in Fig. 6.
Fig. 7 is a schematic view showing an embodiment 7 of the present invention.
Fig. 7A is a cross-section view through a line 7A-7A in Fig. 7.
Fig. 7B is a left side view of the embodiment 7 shown in Fig. 7.
Fig. 8 is a schematic view showing an embodiment 8 of the present invention.
Fig. 8A is a cross-section view through a line 8A-8A in Fig. 8.
Fig. 8B is a left side view of the embodiment 8 shown in Fig. 8.

### DETAILED DESCRIPTION OF THE DRAWINGS

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

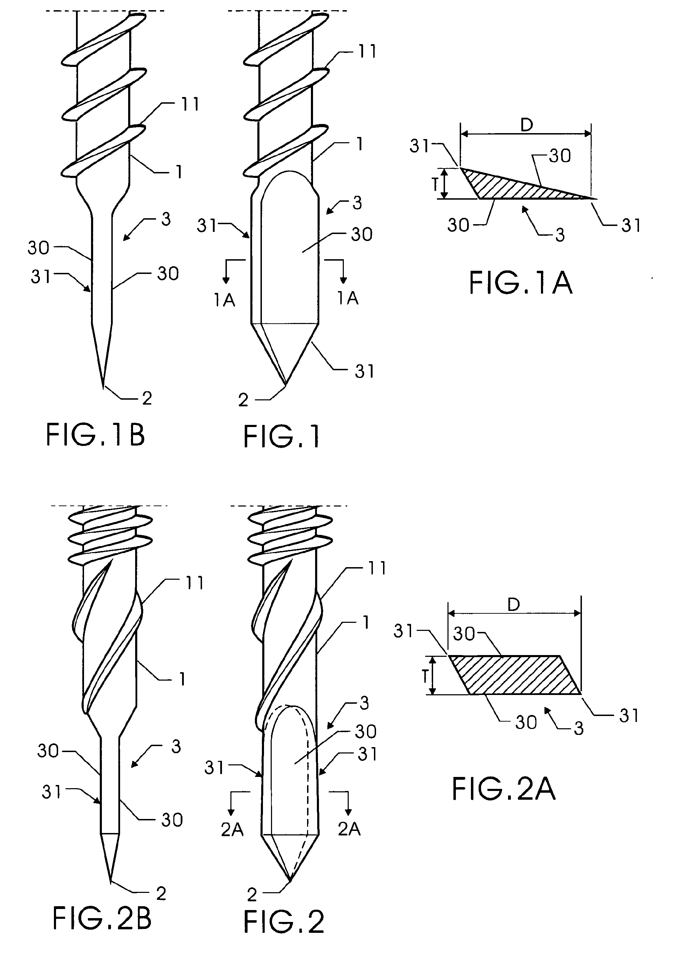

Referring to Figs. 1 to 8, preferable embodiments of a flat drill end of a screw according to the present invention are illustrated. The flat drill end of a screw is suitable for screw ends of various drill screws for wood with split prevention. The embodiments of the flat drill end of a screw generally includes a cylinder 1 having a thread 11 wrapped around the cylinder 1, a sharp drill end 2 formed to the end of the cylinder 1, a flat drill portion 3 formed to the cylinder 1 along to the sharp drill end 2 with a predetermined length. The width D of the flat drill portion 3 is smaller than an outer diameter of the thread 11. A thickness T of the flat drill portion 3 is less or equal to a half of the width D of the flat drill portion 3. Two surfaces 30 of the flat drill portion 3 are flat surfaces or curved surfaces, and the two lateral edges of the flat drill portion 3 are blades 31.

Referring to Figs. 1, 1A and 1B, the embodiment 1 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. The cross-section of the flat drill portion 3 is not symmetric so as to receive more debris caused by drilling. The edges of the flat drill portion 3 are sharp blades 31 and the two surfaces 30 of the flat drill portion 3 are both plane as shown in Fig. 1A.

Referring to Figs. 2, 2A and 2B, the embodiment 2 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. The cross-section of the flat drill portion 3 is symmetric as a parallelogram so as to receive the debris caused by drilling. The edges of the flat drill portion 3 are both sharp blade 31 and the two surfaces 30 of the flat drill portion 3 are both plane as shown in Fig. 2A.

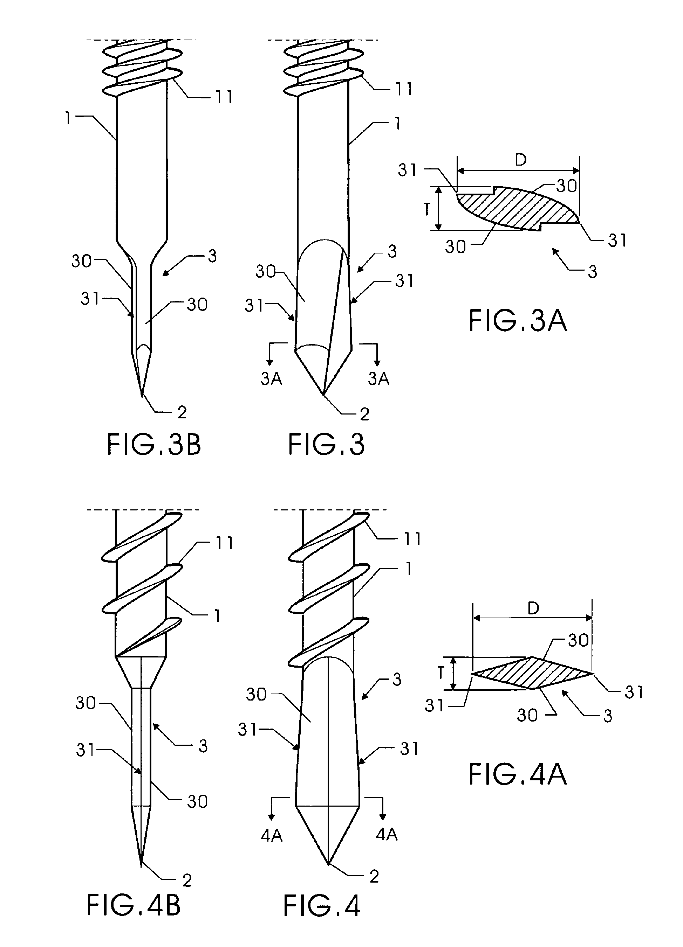

Referring to Figs. 3, 3A and 3B, the embodiment 3 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. The flat drill portion 3 is formed as a flat drilling head for receiving debris caused by drilling. The edges of the flat drill portion 3 are formed as sharp blade 31 and the two surfaces 30 are curved as shown in Fig. 3A.

Referring to Figs. 4, 4A and 4B, the embodiment 4 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. A middle portion of the flat drill portion 3 is wider than the upper and the lower portion as a sword shown in Fig. 4. The edges of the flat drill portion 3 are sharp blades 31 and the two surfaces 30 are composite planes as shown in Fig. 4A.

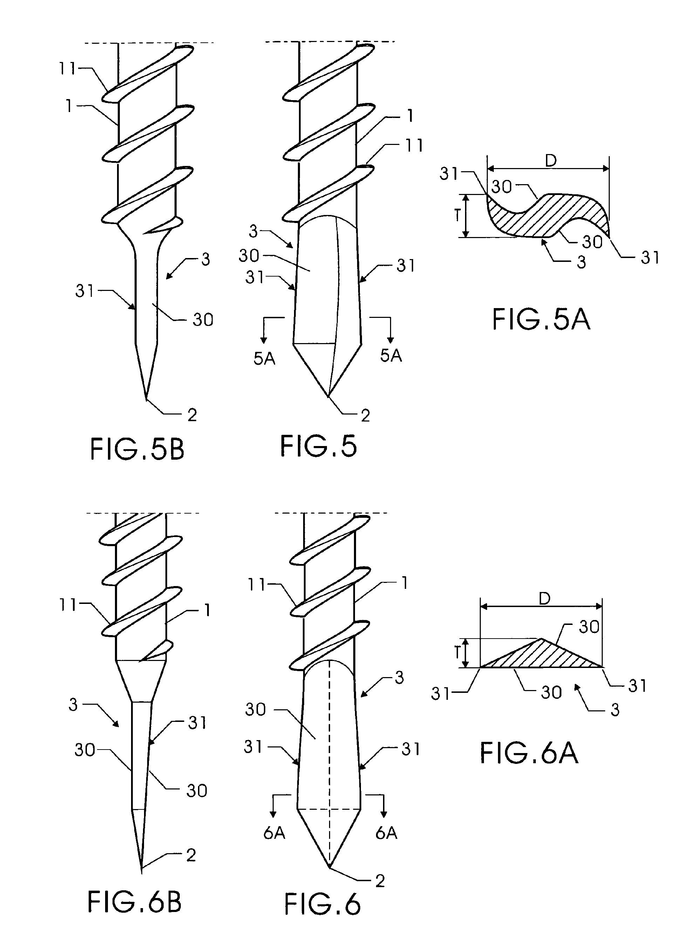

Referring to Figs. 5, 5A and 5B, the embodiment 5 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. The flat drill portion 3 is formed as a flat drilling head for receiving debris caused by drilling. The edges of the flat drill portion 3 are formed as sharp blade 31 and the two surfaces 30 are curved surface with a concave as shown in Fig. 5A.

Referring to Figs. 6, 6A and 6B, the embodiment 6 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. A middle portion of the flat drill portion 3 is wider than the upper and the lower sections as a sword shown in Fig. 6. The edges of the flat drill portion 3 are formed as sharp blade 31 and the two surfaces 30 are a plane and a composite plane respectively as shown in Fig. 6A.

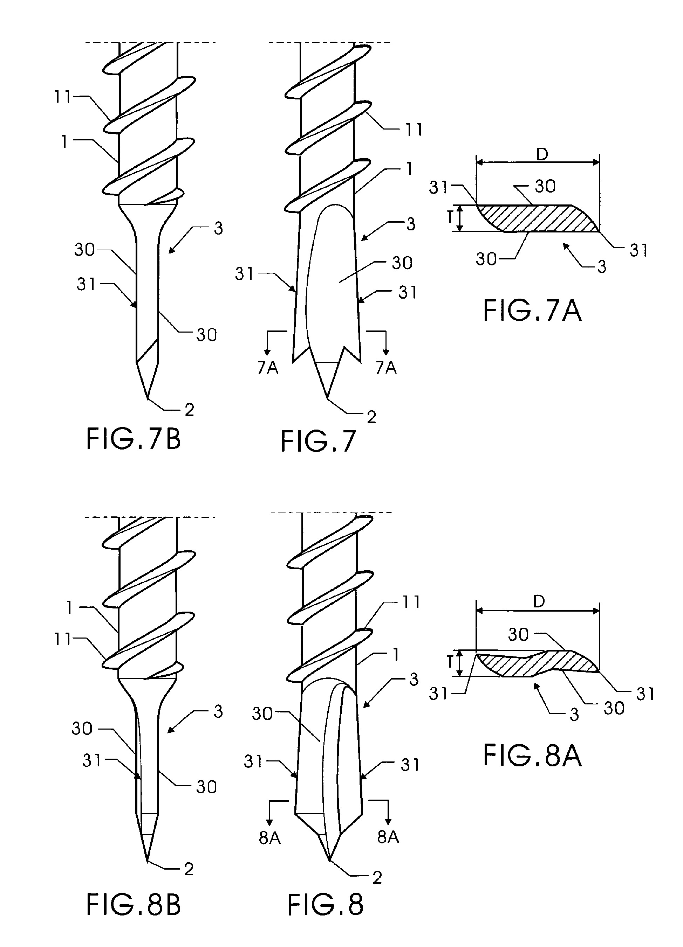

Referring to Figs. 7, 7A and 7B, the embodiment 7 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. The flat drill portion 3 is formed as a flat trident drilling head for receiving debris caused by drilling. The edges of the flat drill portion 3 are formed as a sharp blade 31 and the two surfaces 30 of the flat drill portion 3 are both plane as shown in Fig. 7A.

Referring to Figs. 8, 8A and 8B, the embodiment 8 has a flat drill portion 3 formed to a cylinder 1 along to a sharp drill end 2 with a predetermined length. A width D of the flat drill portion 3 is less than an outer diameter of the thread 11. A thickness T of the flat drill portion 3 is less or equal to a half of the width D of the flat drill portion 3. The flat drill portion 3 is formed as a flat drilling head for receiving debris caused by drilling. The edges of the flat drill portion 3 are formed as sharp blade 31 and the two surfaces 30 are curved surface as shown in Fig. 8A.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A flat drill end of a screw comprising:
a cylinder (1) having a drill end (2) and a thread (11) wrapped around the cylinder (1);
a flat drill portion (3) formed to the cylinder (1) along to the drill end (2) of the cylinder (1) with a predetermined length;
wherein the thickness of the flat drill portion (3) is less than a half of the width (D) of the flat drill portion (3).

2. The flat drill end of a screw as claimed in claim 1, wherein two lateral edges of the flat drill portion (3) are formed as sharp blades (31).

3. The flat drill end of a screw as claimed in claim 1, wherein two lateral surfaces (30) of the flat drill portion (3) are both plane.

4. The flat drill end of a screw as claimed in claim 1, wherein two lateral surfaces (30) of the flat drill portion (3) are a plane and a curved plane respectively.

5. The flat drill end of a screw as claimed in claim 1, wherein two lateral surfaces (30) of the flat drill portion (3) are both curved plane.
